# EUROPEAN PATENT APPLICATION

(11) **EP 4 819 268 A1**
(43) Date of publication of application: **07.10.2026**
(21) Application number: 25806780.0
(22) Date of filing: 27.04.2025
(51) Int. Cl.: H01M 10/04, H01M 10/613, H01M 10/615, H01M 10/625, H01M 10/647, H01M 10/655

(54) **BATTERY AND ELECTRIC APPARATUS**

(30) Priority: 21.05.2024 CN 202421119288 U
(71) Applicant: Contemporary Amperex Technology Co., Limited, Ningde, Fujian 352100 (CN)
(72) Inventor: CHAN, Libing, Ningde, Fujian 352100 (CN); DU, Zhichao, Ningde, Fujian 352100 (CN); QIU, Wei, Ningde, Fujian 352100 (CN); CAO, Gen, Ningde, Fujian 352100 (CN); LIU, Lijuan, Ningde, Fujian 352100 (CN); WU, Shouyong, Ningde, Fujian 352100 (CN)
(74) Representative: Kraus & Lederer PartGmbB
(86) International application number: PCT/CN2025/091573
(87) International publication number: WO 2025/241841

(57) **Abstract**

Disclosed in the present application are a battery and an electric apparatus. The battery comprises a first layer of battery cells, a second layer of battery cells and a thermal management assembly, wherein the first layer of battery cells and the second layer of battery cells are stacked in a first direction; at least a portion of the thermal management assembly is located between the first layer of battery cells and the second layer of battery cells; and the first layer of battery cells and the second layer of battery cells are both in thermally conductive connection with the thermal management assembly, and the thermal management assembly is used for regulating the temperatures of the first layer of battery cells and the second layer of battery cells. The energy density of the battery can be effectively improved.

## Description

### CROSS-REFERENCE TO RELATED APPLICATIONS

The present application claims priority to Chinese Patent Application No. 202421119288.X, filed on May 21, 2024 and entitled "BATTERY AND ELECTRIC APPARATUS", which is incorporated herein by reference in its entirety.

### TECHNICAL FIELD

The present application relates to the field of battery technologies, and specifically, to a battery, and an electric apparatus.

### BACKGROUND

With the development of new energy technologies, batteries are more widely used. Batteries feature high energy density, high reliability, a long service life, and environmental friendliness for social environments, and have been widely used in aspects such as passenger vehicles, commercial vehicles, electric bicycles, heavy trucks, energy storage facilities, battery swapping stations, engineering manufacturing, and intelligent instruments, and further promote the technical development and research in aspects such as communication terminals, medical instruments, and energy development.

In battery technologies, how to increase the energy density of a battery is a technical problem to be solved urgently.

### SUMMARY

Embodiments of the present application provide a battery, and an electric apparatus, which can effectively improve the energy density of the battery.

According to a first aspect, an embodiment of the present application provides a battery, where the battery comprises a first layer of battery cells, a second layer of battery cells, and a thermal management assembly, and the first layer of battery cells and the second layer of battery cells are stacked in a first direction; and at least a portion of the thermal management assembly is located between the first layer of battery cells and the second layer of battery cells,

the first layer of battery cells and the second layer of battery cells are both in thermally conductive connection with the thermal management assembly, and the thermal management assembly is used for regulating the temperatures of the first layer of battery cells and the second layer of battery cells.

In the foregoing technical solution, the first layer of battery cells and the second layer of battery cells share the thermal management assembly, which reduces the quantity of the thermal management assemblies, and implements high integration of the battery, thereby contributing to improving the energy density of the battery.

In some embodiments, the first layer of battery cells is connected to the thermal management assembly by using a first thermally conductive adhesive, and the second layer of battery cells is connected to the thermal management assembly by using a second thermally conductive adhesive.

In the foregoing technical solution, the first thermally conductive adhesive can improve the heat exchange efficiency between the first layer of battery cells and the thermal management assembly, and the second thermally conductive adhesive can improve the heat exchange efficiency between the second layer of battery cells and the thermal management assembly, thereby improving the thermal management effect and improving the reliability of the battery.

In some embodiments, the thermal management assembly comprises a first thermal management component and a pair of second thermal management components; in the first direction, the first thermal management component is located between the first layer of battery cells and the second layer of battery cells; and the pair of second thermal management components are spaced apart in a second direction, the first thermal management component is connected to the pair of second thermal management components, and the second direction is perpendicular to the first direction.

In the foregoing technical solution, a thermal management assembly with higher structural strength and larger heat exchange area can be obtained.

In some embodiments, the first thermal management component and the second thermal management component are integrally molded or welded.

In the foregoing technical solution, the first thermal management component and the second thermal management component are integrally molded, so that the thermal management assembly with higher structural strength can be obtained. Welding the first thermal management component to the second thermal management component can reduce the difficulty in manufacturing the thermal management assembly.

In some embodiments, in the first direction, the first thermal management component has a first surface and a second surface that are arranged opposite to each other, and two ends of the second thermal management component respectively extend beyond the first surface and the second surface; and
in the second direction, the first layer of battery cells and the second layer of battery cells are located between the pair of second thermal management components.

In the foregoing technical solution, the first layer of battery cells is located between the pair of second thermal management components, so that the thermal management effect of the thermal management assembly on the first layer of battery cells can be improved. The second layer of battery cells is located between the pair of second thermal management components, so that the thermal management effect of the thermal management assembly on the second layer of battery cells can be improved, thereby balancing the internal temperature of the battery and improving the reliability of the battery.

In some embodiments, the first thermally conductive adhesive comprises a first portion and a second portion, the first layer of battery cells is connected to the first thermal management component by using the first portion, and the first layer of battery cells is connected to the second thermal management component by using the second portion.

In the foregoing technical solution, the first portion is located between the first layer of battery cells and the first thermal management component, to improve the heat exchange efficiency between the first thermal management component and the first layer of battery cells. The second portion is located between the first layer of battery cells and the second thermal management component, to improve the heat exchange efficiency between the second thermal management component and the first layer of battery cells.

In some embodiments, the second thermally conductive adhesive comprises a third portion and a fourth portion, the second layer of battery cells is connected to the first thermal management component by using the third portion, and the second layer of battery cells is connected to the second thermal management component by using the fourth portion.

In the foregoing technical solution, the third portion is located between the second layer of battery cells and the first thermal management component, to improve the heat exchange efficiency between the first thermal management component and the second layer of battery cells. The fourth portion is located between the second layer of battery cells and the second thermal management component, to improve the heat exchange efficiency between the second thermal management component and the second layer of battery cells.

In some embodiments, the battery further comprises a first cover and a second cover. The first cover is connected to the second thermal management component, and in the first direction, the first layer of battery cells is located between the first cover and the first thermal management component; and the second cover is connected to the second thermal management component, in the first direction, the first cover is disposed opposite to the second cover, the first thermal management component is located between the first cover and the second cover, and the second layer of battery cells is located between the second cover and the first thermal management component.

In the foregoing technical solution, the first layer of battery cells is located between the first cover and the first thermal management component, thereby reducing the risk of damage to the first layer of battery cells, and improving the maintainability of the first layer of battery cells. The second layer of battery cells is located between the second cover and the first thermal management component, thereby reducing the risk of damage to the second layer of battery cells and improving the maintainability of the second layer of battery cells.

In some embodiments, the first layer of battery cells comprises a plurality of first battery modules spaced apart in a second direction, and the second direction is perpendicular to the first direction; and the thermal management assembly comprises a first thermal management component and a third thermal management component;

in the first direction, the first thermal management component is located between the first layer of battery cells and the second layer of battery cells; and the third thermal management component is disposed on the first thermal management component and located between two adjacent first battery modules.

In the foregoing technical solution, the third thermal management component can increase the heat exchange area between the thermal management assembly and the first battery module, thereby improving the heat exchange efficiency.

In some embodiments, the first thermally conductive adhesive comprises a first portion and a fifth portion, the first battery module is connected to the first thermal management component by using the first portion, and the first battery module is connected to the third thermal management component by using the fifth portion.

In the foregoing technical solution, the first portion is located between the first battery module and the first thermal management component, to improve the heat exchange efficiency between the first thermal management component and the first battery module. The fifth portion is located between the first battery module and the third thermal management component, to improve the heat exchange efficiency between the third thermal management component and the first battery module.

In some embodiments, the first thermal management component and the third thermal management component are integrally molded or welded.

In the foregoing technical solution, the first thermal management component and the third thermal management component are integrally molded, so that the thermal management assembly with relatively high structural strength can be obtained. The first thermal management component and the third thermal management component can reduce the difficulty in manufacturing the thermal management assembly.

In some embodiments, the second layer of battery cells comprises a plurality of second battery modules spaced apart in the second direction; and
the thermal management assembly further comprises a fourth thermal management component, and the fourth thermal management component is disposed on the first thermal management component and located between two adjacent second battery modules.

In the foregoing technical solution, the fourth thermal management component can increase the heat exchange area between the thermal management assembly and the second battery module, thereby improving the heat exchange efficiency.

In some embodiments, the second thermally conductive adhesive comprises a third portion and a sixth portion, the second battery module is connected to the first thermal management component by using the third portion, and the second battery module is connected to the fourth thermal management component by using the sixth portion.

In the foregoing technical solution, the third portion is located between the second battery module and the first thermal management component, to improve the heat exchange efficiency between the first thermal management component and the second battery module. The sixth portion is located between the second battery module and the fourth thermal management component, to improve the heat exchange efficiency between the fourth thermal management component and the second battery module.

In some embodiments, the first thermal management component and the fourth thermal management component are integrally molded or welded.

In the foregoing technical solution, the first thermal management component and the fourth thermal management component are integrally molded, so that the thermal management assembly with relatively high structural strength can be obtained. Welding the first thermal management component to the fourth thermal management component can reduce the difficulty in manufacturing the thermal management assembly.

In some embodiments, the first layer of battery cells comprises a plurality of first battery cells, and in the first direction, one end that is of the first battery cell and that is away from the second layer of battery cells is provided with a first electrode terminal; and
the second layer of battery cells comprises a plurality of second battery cells, and in the first direction, one end that is of the second battery cell and that is away from the first layer of battery cells is provided with a second electrode terminal.

In the foregoing technical solution, the first electrode terminal is disposed at the end that is of the first battery cell and that is away from the second layer of battery cells, and the second electrode terminal is disposed at the end that is of the second battery cell and that is away from the first layer of battery cells, so that the first electrode terminal is relatively far away from the second electrode terminal, reducing the risk of a short circuit between the first layer of battery cells and the second layer of battery cells, and improving the electrical reliability.

In some embodiments, the first direction is parallel to a direction of gravity.

According to a second aspect, an embodiment of the present application provides an electric apparatus, wherein the electric apparatus comprises the foregoing battery, and the battery is used for supplying power to the electric apparatus.

### BRIEF DESCRIPTION OF THE DRAWINGS

To describe the technical solutions in the embodiments of the present application more clearly, the following briefly describes the accompanying drawings required for describing the embodiments. It should be understood that the following accompanying drawings show only some embodiments of the present application, and therefore should not be considered as a limitation on the scope. A person of ordinary skill in the art may further obtain other related accompanying drawings according to these accompanying drawings without creative efforts.
FIG. 1 is a schematic structural diagram of a vehicle according to some embodiments of the present application;
FIG. 2 is an exploded schematic diagram of a battery according to some embodiments of the present application;
FIG. 3 is a cross-sectional view of a battery according to some embodiments of the present application;
FIG. 4 is a cross-sectional view of a battery according to some other embodiments of the present application;
FIG. 5 is a schematic diagram of a structure of a thermal management assembly according to some embodiments of the present application;
FIG. 6 is a schematic diagram of a structure of a thermal management assembly according to some other embodiments of the present application;
FIG. 7 is a schematic diagram of a structure of a thermal management assembly and an end wall according to some embodiments of the present application; and
FIG. 8 is an exploded schematic diagram of a first cover according to some embodiments of the present application.

Reference number: 100: battery; 10: first layer of battery cells; 11: first battery module; 101: first battery cell; 1011: first electrode terminal; 20: second layer of battery cells; 21: second battery module; 201: second battery cell; 2011: second electrode terminal; 30: first cover; 31: first cover body; 32: first inner plate; 33: first buffer layer; 40: second cover; 50: thermal management assembly; 51: second thermal management component; 511: second flow channel; 52: first thermal management component; 521: first surface; 522: second surface; 523: first flow channel; 53: third thermal management component; 531: third flow channel; 54: fourth thermal management component; 541: fourth flow channel; 60: first thermally conductive adhesive; 61: first portion; 62: second portion; 63: fifth portion; 70: second thermally conductive adhesive; 71: third portion; 72: fourth portion; 73: sixth portion; 80: end wall; 81: first outer flange; 82: second outer flange; 91: first cavity; 92: second cavity; 1000: vehicle; 200: motor; 300: controller; Z: first direction; Y: second direction; X: third direction.

The accompanying drawings are not drawn to actual scale.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the description of the present application, it should be noted that, unless otherwise specified, "a plurality of" means two or more. Orientations or positional relationships indicated by the terms "upper", "lower", "left", "right", "inner", "outer", and the like are merely for convenience of description of the present application and simplicity of description, and do not indicate or imply that an apparatus or an element to be referred to must have a specific orientation, or be constructed and operated in a specific orientation, and therefore should not be understood as a limitation on the present application. In addition, the terms "first", "second", "third", and the like are used merely for description purposes, and should not be understood as an indication or implication of relative importance. "Perpendicular" is not perpendicular in the strict sense, but is within an allowable range of error. "Parallel" is not parallel in the strict sense, but is within an allowable range of error.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, the battery cell may include but is not limited to a lithium-ion secondary battery, a lithium-ion primary battery, a lithium-sulfur battery, a sodium-lithium ion battery, a sodium-ion battery, a magnesium-ion battery, or the like. The battery cell includes but is not limited to the shape of a cylinder, a flat body, a cuboid, or the like. The battery cell generally includes a cylindrical battery cell, a square battery cell, a pouch battery cell, and the like based on a packaging manner. The battery cell may alternatively be a blade battery.

For example, the battery cell includes an electrode assembly and an electrolyte. The electrode assembly is composed of a positive electrode plate, a negative electrode plate and a separator. Working of the battery cell mainly relies on migration of metal ions between the positive electrode plate and the negative electrode plate. The metal ions (for example, lithium ions) are intercalated or de-intercalated between the positive electrode and negative electrode back and forth. The separator is disposed between the positive electrode and the negative electrode to prevent the positive electrode plate and the negative electrode plate from being short-circuited and to allow active ions to pass therethrough.

The positive electrode plate includes a positive electrode current collector and a positive electrode active material layer. The positive electrode active material layer is coated on the surface of the positive electrode current collector. The positive electrode current collector not coated with the positive electrode active material layer protrudes from the positive electrode current collector coated with the positive electrode active material layer, and the positive electrode current collector not coated with the positive electrode active material layer is used as a positive electrode tab.

A lithium-ion battery is used as an example. A positive electrode active material may be lithium cobalt oxide, lithium iron phosphate, ternary lithium, lithium manganate oxide, or the like. The positive electrode current collector may be a metal foil or a composite current collector. For example, silver-plated aluminum, silver-plated stainless steel, stainless steel, copper, aluminum, a carbon electrode, carbon, nickel, titanium, or the like can be used as the metal foil. The composite current collector may include a macromolecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a macromolecular material (a substrate of polypropylene, polyethylene terephthalate, polybutylene terephthalate, polystyrene, polyethylene, or the like).

The negative electrode plate includes a negative electrode current collector and a negative electrode active material layer. The negative electrode active material layer is coated on the surface of the negative electrode current collector. The negative electrode current collector not coated with the negative electrode active material layer protrudes from the negative electrode current collector coated with the negative electrode active material layer, and the negative electrode current collector not coated with the negative electrode active material layer is used as a negative electrode tab.

The negative electrode current collector may be a metal foil or a composite current collector. For example, silver-plated aluminum, silver-plated stainless steel, stainless steel, copper, aluminum, a carbon electrode, carbon, nickel, titanium, or the like can be used as the metal foil. The negative electrode active material may be carbon, silicon, or the like.

To reduce the risk that a large current passes through a tab and fusing occurs, a plurality of positive electrode tabs are provided and stacked together, and a plurality of negative electrode tabs are provided and stacked together. The separator may be made of PP (polypropylene, polypropylene), PE (polyethylene, polyethylene), or the like. In addition, the electrode assembly may be of a winding structure or may be of a laminated structure.

A battery mentioned in the embodiments of the present application refers to a single physical module including one or a plurality of battery cells to provide a higher voltage and capacity. The battery generally includes a case for encapsulating one or more battery cells. The box can reduce impact of liquids or other foreign objects on the charging or discharging of the battery cells.

In some embodiments, the battery may be an energy storage device. The energy storage device includes an energy storage container, an energy storage cabinet, and the like.

In the development of battery technologies, various design factors, for example, performance parameters such as energy density, cycle life, discharge capacity, and charge/discharge rate are simultaneously taken into consideration. In addition, the energy density of the battery also needs to be taken into consideration.

In the battery technologies, the temperature of the battery cell is usually adjusted by bottom water cooling. The more the battery cells, the larger the area of the required thermal management assembly and the larger the occupied space, resulting in a decrease in the energy density of the battery.

In view of this, to solve the problems of large space occupied by the thermal management component and low energy density of the battery, embodiments of the present application provide a battery. The battery includes a first layer of battery cells, a second layer of battery cells, and a thermal management assembly. The first layer of battery cells and the second layer of battery cells are stacked in a direction of gravity. At least a portion of the thermal management assembly is located between the first layer of battery cells and the second layer of battery cells. The first layer of battery cells and the second layer of battery cells are both in thermally conductive connection with the thermal management assembly, and the first layer of battery cells and the second layer of battery cells share one thermal management assembly, so that the quantity of thermal management assemblies is reduced, the integration of the battery is improved, and the energy density of the battery is improved.

The technical solution disclosed in the embodiments of the present application is applicable, without limitation, to batteries 100 and electric apparatuses using the batteries 100.

The electric apparatus may be a vehicle 1000, a mobile phone, a portable device, a notebook computer, a ship, a spacecraft, an electric toy, an electric tool, or the like. The vehicle 1000 may be a fuel vehicle, a gas vehicle, or a new energy vehicle, and the new energy vehicle may be a battery electric vehicle, a hybrid vehicle, or a range-extended electric vehicle. The spacecraft may include aircrafts, rockets, space shuttles, spaceships, and the like. The electric toy may include stationary or mobile electric toys, such as game machines, electric car toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

To facilitate description, in the following embodiments, a vehicle 1000 is used as an example of the electric apparatus.

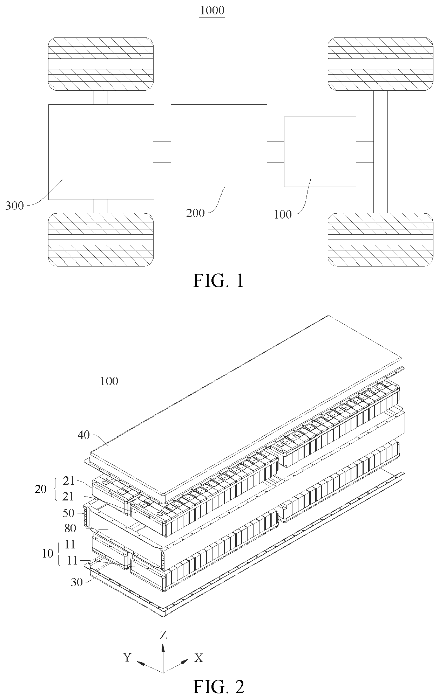

Referring to FIG. 1, FIG. 1 is a schematic diagram of a structure of a vehicle 1000 according to some embodiments of the present application. A battery 100 is disposed inside the vehicle 1000, and the battery 100 may be disposed at the bottom, head, or tail of the vehicle 1000. The battery 100 may be used for supplying power to the vehicle 1000. For example, the battery 100 may be used as an operating power source of the vehicle 1000.

The vehicle 1000 may further include a controller 300 and a motor 200, where the controller 300 is used for controlling the battery 100 to supply power to the motor 200, for example, for the working power requirement of the vehicle 1000 during starting, navigating, and driving.

In some embodiments of the present application, the battery 100 may be used not only as an operating power source for the vehicle 1000, but also as a driving power source for the vehicle 1000, instead of or partially instead of fuel or natural gas to provide driving power for the vehicle 1000.

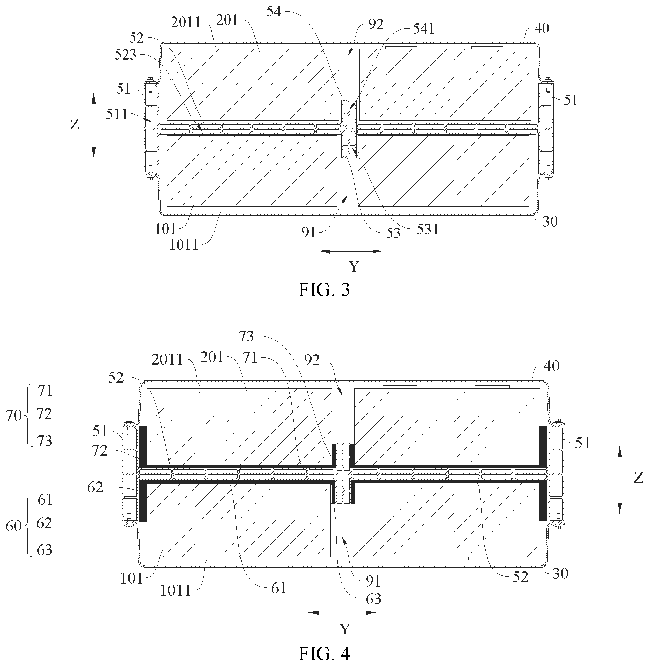

FIG. 2 is an exploded schematic diagram of a battery 100 according to some embodiments of the present application. FIG. 3 is a cross-sectional view of a battery 100 according to some embodiments of the present application.

Referring to FIG. 2 and FIG. 3, embodiments of the present application provide a battery 100. The battery 100 includes a first layer of battery cells 10, a second layer of battery cells 20, and a thermal management assembly 50. The first layer of battery cells 10 and the second layer of battery cells 20 are stacked in a first direction Z. At least a portion of the thermal management assembly 50 is located between the first layer of battery cells 10 and the second layer of battery cells 20. The first layer of battery cells 10 and the second layer of battery cells 20 are both in thermally conductive connection with the thermal management assembly 50. The thermal management assembly 50 is used for regulating the temperatures of the first layer of battery cells 10 and the second layer of battery cells 20.

The first layer of battery cells 10 may include a plurality of first battery cells 101, and the plurality of first battery cells 101 may be connected in series, in parallel, or in series-parallel. The series-parallel connection means that the plurality of first battery cells 101 are connected both in series and in parallel. The plurality of first battery cells 101 may be arranged and fixed to form one or more battery 100 modules. For example, the plurality of first battery cells 101 are arranged and fixed into four battery 100 modules.

The second layer of battery cells 20 may include a plurality of second battery cells 201, and the plurality of second battery cells 201 may be connected in series, in parallel, or in series-parallel. The series-parallel connection means that the plurality of second battery cells 201 are connected both in series and in parallel. The plurality of second battery cells 201 may be arranged and fixed into one or more battery 100 modules. For example, the plurality of second battery cells 201 are arranged and fixed into four battery 100 modules.

In some embodiments, the battery 100 may further include a busbar component (not shown in the figure). The plurality of first battery cells 101 may be connected through the busbar component to implement series connection, parallel connection, or series-parallel connection. The plurality of second battery cells 201 may be connected in series, in parallel, or in series-parallel through the busbar component. The busbar component may be a metal conductor, such as copper, iron, aluminum, steel, or aluminum alloy.

The thermal management assembly 50 is a component for regulating the temperature of the battery 100 cell, and a flow channel for accommodating a heat exchange medium is formed in the thermal management assembly 50. The heat exchange medium may also be referred to as a cooling medium or cooling fluid. The heat exchange medium may be fluid or gas, and regulating the temperature means heating or cooling a plurality of battery 100 cells. Optionally, the fluid may flow in a circulating manner, to achieve a better temperature adjustment effect. Optionally, the fluid may be water, a mixture of water and ethylene glycol, air, or the like.

In some embodiments, the battery 100 may include a box body. The box body includes two hollow cover structures, and the two cover structures are covered together to form an accommodating space for accommodating the first-side battery 100 cells and the second layer of battery cells 20.

That at least a portion of the thermal management assembly 50 is located between the first layer of battery cells 10 and the second layer of battery cells 20 may mean that: a portion of the thermal management assembly 50 may be located between the first layer of battery cells 10 and the second layer of batteries 100. The thermal management assembly 50 may alternatively be located between the first layer of battery cells 10 and the second layer of battery cells 20. For example, the thermal management assembly 50 is configured as a rectangular plate, and the first layer of battery cells 10 and the second layer of battery cells 20 are disposed on two sides of the rectangular plate in the thickness direction.

The first direction Z may be the direction of gravity, or may be a direction having an angle with the direction of gravity. Hereinafter, for convenience of description, the rectangular battery 100 is used as an example. The direction parallel to the direction of gravity is defined as the first direction Z, the width direction of the battery 100 is defined as a second direction Y, and the length direction of the battery 100 is defined as a third direction X.

In some embodiments, the first direction Z is regarded as the direction of gravity, and the first layer of battery cells 10 and the second layer of battery cells 20 are located on the upper and lower sides of the thermal management assembly 50. For example, as shown in FIG. 3, the first layer of battery cells 10 is disposed on the upper portion, the second layer of batteries 100 is disposed on the upper portion, and a portion of the thermal management assembly 50 is located between the first layer of battery cells 10 and the second layer of battery cells 20.

The thermal management assembly 50 is used for regulating the temperatures of the first layer of battery cells 10 and the second layer of battery cells 20. That is, the thermal management assembly 50 not only regulates the temperature of the first layer of battery cells 10, but also regulates the temperature of the second layer of battery cells 20, and the first layer of battery cells 10 and the second layer of battery cells 20 share the thermal management assembly 50.

The first layer of battery cells 10 and the second layer of battery cells 20 are both in thermally conductive connection with the thermal management assembly 50, meaning that the first layer of battery cells 10 and the second layer of battery cells 20 can exchange heat with the thermal management assembly. The thermally conductive connection may be direct contact or may involve the use of a thermally conductive medium. The thermally conductive medium includes, but is not limited to, a thermally conductive adhesive, a thermally conductive paste, a thermally conductive film, or the like. Optionally, the first layer of battery cells 10 and the second layer of battery cells 20 are both in connection with the thermal management assembly 50 by using the thermally conductive adhesive.

The thermal management assembly 50 may be made from various materials, such as copper, iron, aluminum, aluminum and alloys thereof. Optionally, the material of the thermal management assembly 50 is aluminum alloy. Copper, manganese, silicon, or the like may be added to the composition of the aluminum alloy to improve the structural performance of the thermal management assembly 50. For example, adding copper may improve the strength of the alloy; adding manganese may improve the corrosion resistance and the strength of the aluminum alloy; and adding silicon may improve corrosion resistance and reduce the coefficient of thermal expansion.

In the foregoing embodiment, the first layer of battery cells 10 and the second layer of battery cells 20 share the thermal management assembly 50, which reduces the number of the thermal management assemblies 50, and implements high integration of the battery 100, thereby contributing to improving the energy density of the battery 100.

FIG. 4 is a cross-sectional view of a battery 100 according to some other embodiments of the present application.

Referring to FIG. 4, in some embodiments, the first layer of battery cells 10 is connected to the thermal management assembly 50 by using a first thermally conductive adhesive 60, and the second layer of battery cells 20 is connected to the thermal management assembly 50 by using a second thermally conductive adhesive 70.

The thermally conductive adhesive is an adhesive having a connection function and a thermally conductive function, and the thermally conductive adhesive may be made from organic silicone, epoxy resin, or acrylic acid as the base material, with the addition of fillers, thermally conductive materials, and other polymer materials.

The materials of the first thermally conductive adhesive 60 and the second thermally conductive adhesive 70 may be the same or different.

The first thermally conductive adhesive 60 and the second thermally conductive adhesive 70 may be selected according to design needs. The first thermally conductive adhesive 60 and the second thermally conductive adhesive 70 may include, but are not limited to, silicone thermally conductive adhesive, epoxy AB adhesive, acrylic thermally conductive adhesive, polyurethane thermally conductive adhesive, and the like.

In this embodiment, the first thermally conductive adhesive 60 can improve the heat exchange efficiency between the first layer of battery cells 10 and the thermal management assembly 50, and the second thermally conductive adhesive 70 can improve the heat exchange efficiency between the second layer of battery cells 20 and the thermal management assembly 50, thereby improving the thermal management effect and improving the reliability of the battery 100.

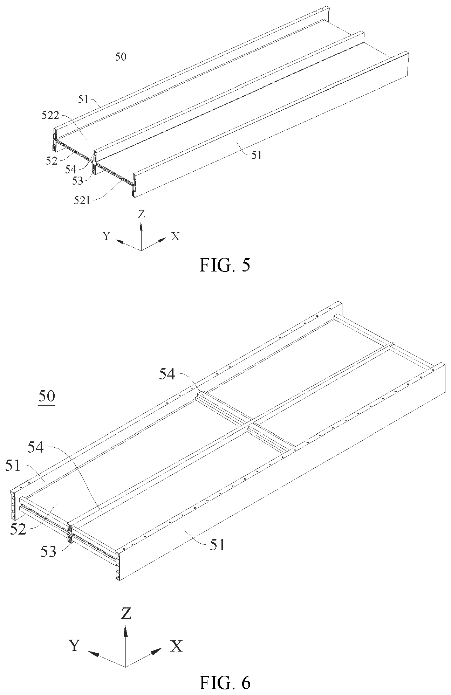

FIG. 5 is a schematic diagram of a structure of a thermal management assembly 50 according to some embodiments of the present application.

Referring to FIG. 5 in combination with FIG. 2, in some embodiments, the thermal management assembly 50 includes a first thermal management component 52 and a pair of second thermal management components 51. In the first direction Z, the first thermal management component 52 is located between the first layer of battery cells 10 and the second layer of battery cells 20. The pair of second thermal management components 51 are spaced apart in the second direction Y, the first thermal management component 52 is connected to the pair of second thermal management components 51, and the second direction Y is perpendicular to the first direction Z.

The first thermal management component 52 and the second thermal management component 51 are heat exchange components, and a flow channel for accommodating a heat exchange medium is formed in each of the first thermal management component 52 and the second thermal management component 51. As shown in FIG. 3, a first flow channel 523 is formed in the first thermal management component 52. A second flow channel 511 is formed inside the second thermal management component 51. The first flow channel 523 and the second flow channel 511 may be in communication with each other, and the first flow channel 523 and the second flow channel 511 may alternatively be independent of each other.

The first thermal management component 52 and the second thermal management component 51 may be the same or different in terms of structure and material. Optionally, in some embodiments, the first thermal management component 52 and the second thermal management component 51 are configured as rectangular plates, the thickness direction of the first thermal management component 52 is parallel to the first direction Z, and the thickness direction of the second thermal management component 51 is perpendicular to the first direction Z.

The first thermal management component 52 has a first surface 521 and a second surface 522 opposite to each other in the thickness direction thereof. In some embodiments, as shown in FIG. 5, in the first direction Z, two ends of the second thermal management component 51 respectively extend beyond the first surface 521 and the second surface 522. The first management component and the pair of second thermal management components 51 are connected to form an H shape.

In this embodiment, the thermal management assembly 50 includes the first thermal management component 52 and the pair of second thermal management components 51, so that the thermal management assembly 50 with higher structural strength and larger heat exchange area can be obtained.

In some embodiments, the first thermal management component 52 and the second thermal management component 51 are integrally molded. The integral molding process includes, but is not limited to, injection molding, extrusion molding, and the like.

The first thermal management component 52 and the second thermal management component 51 are integrally molded, so that the thermal management assembly 50 with higher structural strength can be obtained.

In some embodiments, the first thermal management component 52 is welded to the second thermal management component 51. The welding manner includes, but is not limited to laser welding, friction stir welding, braze welding, or the like. Optionally, the first thermal management component 52 and the second thermal management component 51 are welded by friction stir welding.

Welding the first thermal management component 52 to the second thermal management component 51 can reduce the difficulty in manufacturing the thermal management assembly 50.

Referring to FIG. 5, in some embodiments, in the first direction Z, the first thermal management component 52 has a first surface 521 and a second surface 522 arranged opposite to each other, and two ends of the second thermal management component 51 respectively extend beyond the first surface 521 and the second surface 522. In the second direction Y, the first layer of battery cells 10 and the second layer of battery cells 20 are located between the pair of second thermal management components 51.

Two ends of the second thermal management component 51 respectively extend beyond the first surface 521 and the second surface 522. That is, two ends of the second thermal management component 51 respectively protrude from the first surface 521 and the second surface 522. In some embodiments, the first thermal management component 52 and the pair of second thermal management components 51 are connected in an H shape. In the second direction Y, the two second thermal management components 51 are respectively located on two sides of the first layer of battery cells 10. The first layer of battery cells 10 is located between the pair of second thermal management components 51. The two second thermal management components 51 are also respectively located on two sides of the second layer of battery cells 20. The second layer of battery cells 20 is also located between the pair of second thermal management components 51.

In some embodiments, the size of the second thermal management component 51 exceeding beyond the first surface 521 is equal to the size of the second thermal management component 51 exceeding beyond the second surface 522.

In other embodiments, in the first direction Z, one end of the second thermal management component 51 may only exceed beyond one of the first surface 521 and the second surface 522, and the other end does not exceed beyond the other of the first surface 521 and the second surface 522. For example, one end of the second thermal management component 51 exceeds beyond the first surface 521, and the other end does not exceed beyond the second surface 522. The pair of second thermal management components 51 and the first thermal management component 52 are sequentially connected head to tail to form an n-shaped structure. In this case, in the second direction Y, the two second thermal management components 51 are respectively located on two sides of the first layer of battery cells 10, the first layer of battery cells 10 is located between the pair of second thermal management components 51, no second thermal management component 51 is provided on two sides of the second layer of battery cells 20, and the second layer of battery cells 20 is not located between the pair of second thermal management components 51.

In this embodiment, two ends of the second thermal management component 51 respectively extend beyond the first surface 521 and the second surface 522, and the first layer of battery cells 10 is located between the pair of second thermal management components 51, so that the thermal management effect of the thermal management assembly 50 on the first layer of battery cells 10 can be improved. The second layer of battery cells 20 is located between the pair of second thermal management components 51, so that the thermal management effect of the thermal management assembly 50 on the second layer of battery cells 20 can be improved, thereby balancing the internal temperature of the battery 100 and improving the reliability of the battery 100.

Referring to FIG. 4 in combination with FIG. 5, in some embodiments, the first thermally conductive adhesive 60 includes a first portion 61 and a second portion 62, the first layer of battery cells 10 is connected to the first thermal management component 52 by using the first portion 61, and the first layer of battery cells 10 is connected to the second thermal management component 51 by using the second portion 62.

It may be understood that the first portion 61 of the first thermally conductive adhesive 60 is disposed on the first surface 521, the first portion 61 is located between the first layer of battery cells 10 and the first thermal management component 52, and the second portion 62 of the first thermally conductive adhesive 60 is located between the first layer of battery cells 10 and the second thermal management component 51.

The first portion 61 and the second portion 62 may be connected to each other, or the first portion 61 and the second portion 62 may be separated. For example, the first portion 61 and the second portion 62 may be connected to each other.

In this embodiment, the first portion 61 is located between the first layer of battery cells 10 and the first thermal management component 52, to improve the heat exchange efficiency between the first thermal management component 52 and the first layer of battery cells 10. The second portion 62 is located between the first layer of battery cells 10 and the second thermal management component 51, to improve the heat exchange efficiency between the second thermal management component 51 and the first layer of battery cells 10.

Referring to FIG. 4 in combination with FIG. 5, in some embodiments, the second thermally conductive adhesive 70 includes a third portion 71 and a fourth portion 72, the second layer of battery cells 20 is connected to the first thermal management component 52 by using the third portion 71, and the second layer of battery cells 20 is connected to the second thermal management component 51 by using the fourth portion 72.

It may be understood that the third portion 71 of the second thermally conductive adhesive 70 is disposed on the second surface 522, the third portion 71 is located between the second layer of battery cells 20 and the first thermal management component 52, and the fourth portion 72 of the second thermally conductive adhesive 70 is located between the second layer of battery cells 20 and the second thermal management component 51.

The third portion 71 and the fourth portion 72 may be connected to each other, or the third portion 71 and the fourth portion 72 may be separated. For example, the third portion 71 and the fourth portion 72 may be connected to each other.

In this embodiment, the third portion 71 is located between the second layer of battery cells 20 and the first thermal management component 52, to improve the heat exchange efficiency between the first thermal management component 52 and the second layer of battery cells 20. The fourth portion 72 is located between the second layer of battery cells 20 and the second thermal management component 51, to improve the heat exchange efficiency between the second thermal management component 51 and the second layer of battery cells 20.

In the first direction Z, two ends of the second thermal management component 51 respectively extend beyond the first surface 521 and the second surface 522.

Refer to FIG. 2, FIG. 3, and FIG. 4. In some embodiments, the battery 100 further includes a first cover 30 and a second cover 40. The first cover 30 is connected to the second thermal management component 51. In the first direction Z, the first layer of battery cells 10 is located between the first cover 30 and the first thermal management component 52. The second cover 40 is connected to the second thermal management component 51. In the first direction Z, the first cover 30 and the second cover 40 are disposed opposite to each other. The first thermal management component 52 is located between the first cover 30 and the second cover 40. The second layer of battery cells 20 is located between the second cover 40 and the first thermal management component 52.

The first cover 30 and the second cover 40 may be the same or different in structure and material. The thermal management assembly 50 may be made from various materials, such as copper, iron, aluminum, steel, aluminum alloy, or plastic.

For example, the first cover 30 and the second cover 40 are each configured as a cover with one side open. It should be understood that, in other embodiments, the first cover 30 and/or the second cover 40 may alternatively be configured as a plate-like structure.

The connection between the first cover 30 and the second thermal management component 51 may include, but is not limited to, flange connection, adhesion, or the like. The first cover 30 and the second thermal management component 51 may alternatively be sealed by a sealing member (not shown in the figure).

The connection between the second cover 40 and the second thermal management component 51 may include, but is not limited to, flange connection, adhesion, or the like. The second cover 40 and the second thermal management component 51 may alternatively be sealed by another sealing member (not shown in the figure).

In this embodiment, the first layer of battery cells 10 is located between the first cover 30 and the first thermal management component 52, thereby reducing the risk of damage to the first layer of battery cells 10 and improving the maintainability of the first layer of battery cells 10. The second layer of battery cells 20 is located between the second cover 40 and the first thermal management component 52, thereby reducing the risk of damage to the second layer of battery cells 20 and improving the maintainability of the second layer of battery cells 20.

Referring to FIG. 5 and FIG. 2, in some embodiments, the first layer of battery cells 10 includes a plurality of first battery modules 11 spaced apart in the second direction Y, and the second direction Y is perpendicular to the first direction Z. The thermal management assembly 50 includes a first thermal management component 52 and a third thermal management component 53. In the first direction Z, the first thermal management component 52 is located between the first layer of battery cells 10 and the second layer of battery cells 20. The third thermal management component 53 is disposed on the first thermal management component 52 and located between two adjacent first battery modules 11.

As shown in FIG. 4, a third flow channel 531 for accommodating the heat exchange medium is formed in the third thermal management component 53.

The third thermal management component 53 and the first thermal management component 52 may be the same or different in material.

In some embodiments, the third thermal management component 53 divides the first surface 521 into a plurality of regions to respectively place the first battery modules 11. In this case, the third thermal management component 53 may be understood as a partition beam or a module mounting beam.

The third thermal management component 53 can increase the heat exchange area between the thermal management assembly 50 and the first battery module 11, thereby improving the heat exchange efficiency.

In some embodiments, the first thermally conductive adhesive 60 includes a first portion 61 and a fifth portion 63, the first battery module 11 is connected to the first thermal management component 52 by using the first portion 61, and the first battery module 11 is connected to the third thermal management component 53 by using the fifth portion 63.

It may be understood that the first portion 61 is located between the first thermal management component 52 and the first battery module 11, and the fifth portion 63 is located between the first battery module 11 and the third thermal management component 53.

The first portion 61 and the fifth portion 63 may be the same or different in material. The first portion 61 and the fifth portion 63 may be connected to each other or may be provided separately.

In this embodiment, the first portion 61 is located between the first battery module 11 and the first thermal management component 52, to improve the heat exchange efficiency between the first thermal management component 52 and the first battery module 11. The fifth portion 63 is located between the first battery module 11 and the third thermal management component 53, to improve the heat exchange efficiency between the third thermal management component 53 and the first battery module 11.

In some embodiments, the first thermal management component 52 and the third thermal management component 53 are integrally molded. The integral molding process includes, but is not limited to, injection molding, extrusion molding, and the like.

The first thermal management component 52 and the third thermal management component 53 are integrally molded, so that the thermal management assembly 50 with relatively high structural strength can be obtained.

In some embodiments, the first thermal management component 52 is welded to the third thermal management component 53. The welding manner includes, but is not limited to laser welding, friction stir welding, braze welding, or the like. Optionally, the first thermal management component 52 and the third thermal management component 53 are welded by friction stir welding.

The first thermal management component 52 and the third thermal management component 53 can reduce the difficulty in manufacturing the thermal management assembly 50.

Referring to FIG. 5 in combination with FIG. 2, in some embodiments, the second layer of battery cells 20 includes a plurality of second battery modules 21 spaced apart in the second direction Y. The thermal management assembly 50 further includes a fourth thermal management component 54, and the fourth thermal management component 54 is disposed on the first thermal management component 52 and located between two adjacent second battery modules 21.

As shown in FIG. 4, a fourth flow channel 541 for accommodating the heat exchange medium is formed in the fourth thermal management component 54.

The fourth thermal management component 54 and the first thermal management component 52 may be the same or different in material.

In some embodiments, as shown in FIG. 6, the fourth thermal management component 54 divides the second surface 522 into a plurality of regions to respectively place the second battery modules 21. In this case, the fourth thermal management component 54 may be understood as a partition beam or a module mounting beam.

In this embodiment, the fourth thermal management component 54 can increase the heat exchange area between the thermal management assembly 50 and the second battery module 21, thereby improving the heat exchange efficiency.

Referring to FIG. 4, in some embodiments, the second thermally conductive adhesive 70 includes a third portion 71 and a sixth portion 73, the second battery module 21 is connected to the first thermal management component 52 by using the third portion 71, and the second battery module 21 is connected to the fourth thermal management component 54 by using the sixth portion 73.

It may be understood that the third portion 71 is located between the first thermal management component 52 and the second battery module 21, and the sixth portion 73 is located between the second battery module 21 and the third thermal management component 53.

The third portion 71 and the sixth portion 73 may be the same or different in material. The third portion 71 and the sixth portion 73 may be connected to each other or may be provided separately.

In this embodiment, the third portion 71 is located between the second battery module 21 and the first thermal management component 52, to improve the heat exchange efficiency between the first thermal management component 52 and the second battery module 21. The sixth portion 73 is located between the second battery module 21 and the fourth thermal management component 54, to improve the heat exchange efficiency between the fourth thermal management component 54 and the second battery module 21.

In some embodiments, the first thermal management component 52 and the fourth thermal management component 54 are integrally molded. The integrated molding process may be understood with reference to the first thermal management component 52 and the third thermal management component 53, and details are not described herein again.

The first thermal management component 52 and the fourth thermal management component 54 are integrally molded, so that the thermal management assembly 50 with relatively high structural strength can be obtained.

In some embodiments, the first thermal management component 52 is welded to the fourth thermal management component 54. The welding manner may be understood with reference to the first thermal management component 52 and the third thermal management component 53, and details are not described herein again.

Welding the first thermal management component 52 to the fourth thermal management component 54 can reduce the difficulty in manufacturing the thermal management assembly 50.

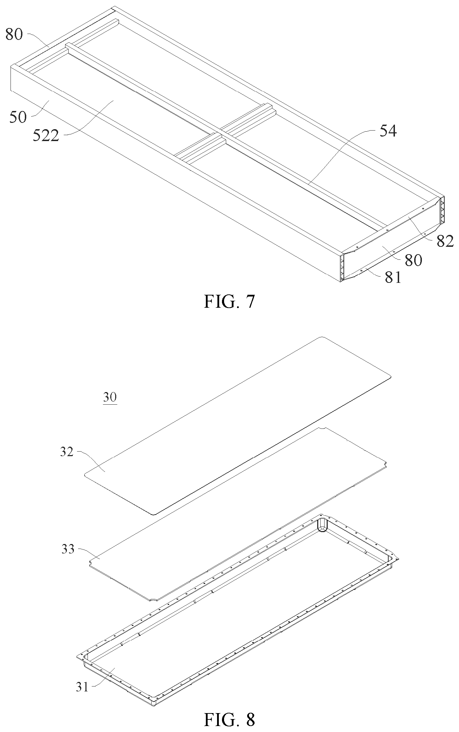

FIG. 7 is a schematic diagram of a structure of a thermal management assembly 50 and an end wall 80 according to some embodiments of the present application.

Referring to FIG. 7, FIG. 2 and FIG. 3, in some embodiments, the battery 100 further includes a pair of end walls 80. The pair of end walls 80 are spaced apart in the third direction X. The first thermal management component 52 is located between the pair of end walls 80. Two ends of each end wall 80 are respectively connected to the pair of second thermal management components 51. The third direction X, the second direction Y and the first direction Z are perpendicular to each other in pairs.

The first cover 30, the second cover 40, the pair of end walls 80, and the pair of second thermal management components 51 enclose and form an accommodating cavity. The first thermal management component 52 divides the accommodating cavity into a first cavity 91 and a second cavity 92. The first layer of battery cells 10 is accommodated in the first cavity 91. The second layer of battery cells 20 is accommodated in the second cavity 92.

It may be understood that the pair of end walls 80, the pair of second thermal management components 51, the first cover 30 and the second cover 40 enclose and form the peripheral structure of the battery 100. The rectangular battery 100 is used as an example. The pair of second thermal management components 51 and the pair of end walls 80 may be configured as rectangular plates. The pair of second thermal management components 51 and the pair of end walls 80 are sequentially connected end to end to form a rectangular frame with openings at two ends. The first cover 30 and the second cover 40 respectively cover the two openings of the rectangular frame.

In some embodiments, as shown in FIG. 7, in the first direction Z, a first outer flange 81 and a second outer flange 82 are respectively formed at two ends of the end wall 80. The first outer flange 81 is used for connecting to the first cover 30, and the second outer flange 82 is used for connecting to the second cover 40.

In some embodiments, the first cavity 91 is not in communication with the second cavity 92, and the first cavity 91 and the second cavity 92 are two cavities independent of each other, which can alleviate the influence of thermal runaway propagation from one cavity to the other cavity. Certainly, in other embodiments, the first cavity 91 and the second cavity 92 may alternatively be in communication with each other to balance the temperature in the battery 100.

In some embodiments, the thermal management assembly 50 is used for carrying the second layer of battery cells 20. The carrying means that the thermal management assembly 50 bears the gravity of the second layer of battery cells 20, and the thermal management assembly 50 applies a force against the gravity to the second layer of battery cells 20. In this case, the first layer of battery cells 10 may be carried by another supporting plate, or by an end plate, or by the first cover 30, or by the wall portion of another box body.

In some embodiments, the thermal management assembly 50 is used for carrying the first layer of battery cells 10 and the second layer of battery cells 20. That is, the thermal management assembly 50 provides a force against the gravity for the first layer of battery cells 10 and the second layer of battery cells 20. It may be understood that the thermal management assembly 50 not only plays a role in thermal management, but also serves as a support.

Referring to FIG. 2 and FIG. 3, in some embodiments, the first layer of battery cells 10 includes a plurality of first battery cells 101, and in the first direction Z, one end that is of the first battery cell 101 and that is away from the second layer of battery cells 20 is provided with a first electrode terminal 1011. The second layer of battery cells 20 includes a plurality of second battery cells 201, and in the first direction Z, one end that is of the second battery cell 201 and that is away from the first layer of battery cells 10 is provided with a second electrode terminal 2011.

It may be understood that the first electrode terminal 1011 and the second electrode terminal 2011 are opposite in orientation.

The first electrode terminal 1011 is a metal component that draws current from the first battery cell 101. For example, the first battery cell 101 is provided with two first electrode terminals 1011 with opposite polarities, and the two first electrode terminals 1011 are located on the same side. The material of the first electrode terminal 1011 includes, but is not limited to, copper, aluminum, or the like.

The second electrode terminal 2011 is a metal component that draws current from the second battery cell 201. For example, the second battery cell 201 is provided with two second electrode terminals 2011 with opposite polarities, and the two second electrode terminals 2011 are located on the same side. The material of the second electrode terminal 2011 includes, but is not limited to, copper, aluminum, or the like.

The first electrode terminal 1011 is disposed at the end that is of the first battery cell 101 and that is away from the second layer of battery cells 20, and the second electrode terminal 2011 is disposed at the end that is of the second battery cell 201 and that is away from the first layer of battery cells 10, so that the first electrode terminal 1011 is relatively far away from the second electrode terminal 2011, reducing the risk of a short circuit between the first layer of battery cells 10 and the second layer of battery cells 20, and improving the electrical reliability.

In the case where the thermal management assembly 50 carries the first layer of battery cells 10, in some embodiments, referring to FIG. 3 and FIG. 4, the first layer of battery cells 10 and the first cover 30 are disposed with a gap therebetween to form a buffer space on this side.

FIG. 8 is an exploded schematic diagram of a first cover 30 according to some embodiments of the present application.

Referring to FIG. 8, further, in some embodiments, the first cover 30 includes a first cover body 31 and a first inner plate 32 that are stacked. The first inner plate 32 is disposed on one side that is of the first cover body 31 and that faces the first layer of battery cells 10. There is a gap between the first inner plate 32 and the first battery cell 101.

The first inner plate 32 may be configured to be circular, rectangular, or special-shaped. For example, the first inner plate 32 is configured as a rectangular plate. The first inner plate 32 may be made of an insulating material to reduce the risk of a short circuit between the first layer of battery cells 10 and the first cover 30, and additionally protect the interior of the box body from corrosion. To improve the structural uniformity of the box body, the first inner plate 32 may be formed by stamping sheet metal and providing an insulating layer on the surface of the sheet metal.

The first cover body 31 is the peripheral structure of the first cover 30. The first cover body 31 may be configured as a cover structure with one side open, and the first cover may alternatively be configured as a plate.

In the case where the first cover 30 is located at the bottom of the battery 100, bottom protection needs to be considered. In this case, the first cover body 31 may adopt a shock-resistant structure and be provided with reinforcing ribs to improve the structural strength of the first cover 30.

In some embodiments, the first cover body 31 may be formed by stamping a steel plate to improve the structural strength of the first cover 30.

In some embodiments, the first cover body 31 may be made from a light alloy material, such as aluminum alloy, to implement a lightweight design.

In some embodiments, the first cover 30 includes a first cover body 31 and a first inner plate 32, so that the maintainability of the first cover 30 can be improved.

In some embodiments, the first cover 30 further includes a first buffer layer 33. The first buffer layer 33 is disposed between the first cover body 31 and the first inner plate 32.

The first buffer layer 33 is an elastic component. The first buffer layer 33 is an interlayer between the first cover body 31 and the first inner plate 32. The material of the first buffer layer 33 includes, but is not limited to, rubber, silicone, polyurethane, polyethylene, foam, or the like. Optionally, the first buffer layer 33 is made from hard rubber, and the rubber has good elasticity, durability, and buffering capacity.

The first buffer layer 33 can absorb or disperse external impact forces, further reducing the risk of damage to the first layer of battery cells 10.

In some embodiments, the first buffer layer 33 is adhered to the first inner plate 32. The adhesive material includes, but is not limited to, a double-faced adhesive, a structural adhesive, or the like.

The first buffer layer 33 is adhered to the first inner plate 32, so that the connection stability between the first buffer layer 33 and the first inner plate 32 is improved, and the connection manner is simple.

The second cover 40 and the first cover 30 may be the same or different in structure according to specific design requirements. For example, the battery 100 being used in the vehicle 1000 is used as an example. If the first cover 30 faces the bottom and needs to resist external impact, the use of the first cover 30 can improve the protection performance of the bottom wall of the box body. The second cover 40 is located at the top and is less likely to be subjected to impact. In this case, the second cover 40 may be made from a material that meets a lightweight index, such as plastic.

In some embodiments, the first direction Z is parallel to the direction of gravity.

Embodiments of the present application provide an electric apparatus, where the electric apparatus includes the foregoing battery 100, and the battery 100 is used for supplying power to the electric apparatus.

Embodiments of the present application further provide a battery 100. The battery 100 includes a first layer of battery cells 10, a second layer of battery cells 20, a thermal management assembly 50, a first cover 30, a second cover 40, and a pair of end walls 80.

The first layer of battery cells 10 and the second layer of battery cells 20 are stacked in a first direction Z, and the first direction Z is parallel to a direction of gravity. The first layer of battery cells 10 includes a plurality of first battery cells 101, and the plurality of first battery cells 101 are fixedly integrated into a plurality of first battery modules 11.

The second layer of battery cells 20 includes a plurality of second battery cells 201, and the plurality of second battery cells 201 are fixedly integrated into a plurality of second battery modules 21.

The thermal management assembly 50 includes a first thermal management component 52, a pair of second thermal management components 51, a third thermal management component 53, and a fourth thermal management component 54. The first thermal management component 52, the pair of second thermal management components 51, the third thermal management component 53, and the fourth thermal management component 54 are integrally molded. The first thermal management component 52 is located between the first layer of battery cells 10 and the second layer of battery cells 20. The pair of second thermal management components 51 are spaced apart in a second direction Y. The first thermal management component 52 is located between the pair of second thermal management components 51. The first thermal management component 52 has a first surface 521 and a second surface 522 opposite to each other in the thickness direction of the first thermal management component. The first surface 521 is a lower surface, and the second surface 522 is an upper surface. In the first direction Z, two ends of the second thermal management component 51 respectively extend beyond the first surface 521 and the second surface 522. A first flow channel 523 for accommodating a heat exchange medium is formed in the first thermal management component 52. A second flow channel 511 for accommodating the heat exchange medium is formed in the second thermal management component 51. A third flow channel 531 for accommodating the heat exchange medium is formed in the third thermal management component 53. A fourth flow channel 541 for accommodating the heat exchange medium is formed in the fourth thermal management component 54.

The first layer of battery cells 10 is adhered to the first surface 521 by using a thermally conductive adhesive. The first layer of battery cells 10 is adhered to the second thermal management component 51 by using the thermally conductive adhesive. The first layer of battery cells 10 is adhered to the third thermal management component 53 by using the thermally conductive adhesive. The second layer of battery cells 20 is adhered to the second surface 522 by using the thermally conductive adhesive. The second layer of battery cells 20 is adhered to the second thermal management component 51 by using the thermally conductive adhesive. The second layer of battery cells 20 is adhered to the fourth thermal management component 54 by using the thermally conductive adhesive. In the second direction Y, the first layer of battery cells 10 and the second layer of battery cells 20 are located between the pair of second thermal management components 51.

The third thermal management component 53 is connected to the first thermal management component 52 and protrudes from the first surface 521. The third thermal management component 53 is located between two adjacent first battery modules 11. Each first battery module 11 is adhered to the third thermal management component 53 by using the thermally conductive adhesive.

The fourth thermal management component 54 is connected to the first thermal management component 52 and protrudes from the second surface 522. The fourth thermal management component 54 is located between two adjacent second battery modules 21. Each second battery module 21 is connected to the fourth thermal management component 54 by using the thermally conductive adhesive.

The pair of end walls 80 are spaced apart in a third direction X. The first thermal management component 52 is located between the pair of end walls 80. Two ends of each end wall 80 are respectively connected to the pair of second thermal management components 51. The first cover 30 is connected to the pair of second thermal management components 51 and the pair of end walls 80. The second cover 40 is connected to the pair of second thermal management components 51 and the pair of second thermal management components 51. The first cover 30, the second cover 40, the pair of end walls 80 and the pair of second thermal management components 51 enclose and form an accommodating cavity. The first thermal management component 52 divides the accommodating cavity into a first cavity 91 and a second cavity 92. The first layer of battery cells 10 is accommodated in the first cavity 91. The second layer of battery cells 20 is accommodated in the second cavity 92.

The thermal management assembly 50 is used for carrying the first layer of battery cells 10 and the second layer of battery cells 20. The thermal management assembly 50 is further used for regulating the temperatures of the first layer of battery cells 10 and the second layer of battery cells 20.

One end that is of the first battery cell 101 and that is away from the thermal management assembly 50 is provided with a first electrode terminal 1011. The first electrode terminal 1011 is located at the bottom of the first battery cell 101. One end that is of the second battery cell 201 and that is away from the thermal management assembly 50 is provided with a second electrode terminal 2011. The second electrode terminal 2011 is located at the top of the second battery cell 201. The first layer of battery cells 10 and the second layer of battery cells 20 are arranged in a mirror image configuration. The mirror plane of the first layer of battery cells 10 and the second layer of battery cells 20 is parallel to the plane formed by the second direction Y and the third direction X.

The first cover 30 includes a first cover body 31, a first inner plate 32, and a first buffer layer 33. The first inner plate 32 is disposed on one side that is of the first cover body 31 and that faces the first layer of battery cells 10. A gap is provided between the first inner plate 32 and the first battery cell 101. The first buffer layer 33 is disposed on the first cover body 31 and the first inner plate 32 of the thermal management assembly 50. The first buffer layer 33 is a rubber layer. The first cover body 31 is formed by stamping steel metal. The first inner plate 32 is formed by stamping steel metal, and the first inner plate 32 is welded to the first cover body 31.

It should be noted that, without contradictory, the embodiments in the present application may be combined with the features in the embodiments.

The above embodiments merely illustrate the technical solutions of the present application and are not intended to limit the present application, and it is obvious to those skilled in the art that the present application may have various modifications and variations. Any modification, equivalent replacement, or improvement made without departing from the spirit and principle of the present application shall fall within the protection scope of the present application.

## Claims

1. A battery, **characterized by** comprising:
a first layer of battery cells and a second layer of battery cells, wherein the first layer of battery cells and the second layer of battery cells are stacked in a first direction; and
a thermal management assembly, wherein at least a portion of the thermal management assembly is located between the first layer of battery cells and the second layer of battery cells,
the first layer of battery cells and the second layer of battery cells are both in thermally conductive connection with the thermal management assembly, and the thermal management assembly is used for regulating the temperatures of the first layer of battery cells and the second layer of battery cells.

2. The battery according to claim 1, wherein the first layer of battery cells is connected to the thermal management assembly by using a first thermally conductive adhesive, and the second layer of battery cells is connected to the thermal management assembly by using a second thermally conductive adhesive.

3. The battery according to claim 2, wherein the thermal management assembly comprises:
a first thermal management component, wherein in the first direction, the first thermal management component is located between the first layer of battery cells and the second layer of battery cells; and
a pair of second thermal management components, wherein the pair of second thermal management components are spaced apart in a second direction, the first thermal management component is connected to the pair of second thermal management components, and the second direction is perpendicular to the first direction.

4. The battery according to claim 3, wherein the first thermal management component and the second thermal management component are integrally molded or welded.

5. The battery according to claim 3 or 4, wherein in the first direction, the first thermal management component has a first surface and a second surface that are arranged opposite to each other, and two ends of the second thermal management component respectively extend beyond the first surface and the second surface; and
in the second direction, the first layer of battery cells and the second layer of battery cells are located between the pair of second thermal management components.

6. The battery according to claim 5, wherein the first thermally conductive adhesive comprises a first portion and a second portion, the first layer of battery cells is connected to the first thermal management component by using the first portion, and the first layer of battery cells is connected to the second thermal management component by using the second portion.

7. The battery according to claim 5 or 6, wherein the second thermally conductive adhesive comprises a third portion and a fourth portion, the second layer of battery cells is connected to the first thermal management component by using the third portion, and the second layer of battery cells is connected to the second thermal management component by using the fourth portion.

8. The battery according to any one of claims 5 to 7, further comprising:
a first cover connected to the second thermal management component, wherein in the first direction, the first layer of battery cells is located between the first cover and the first thermal management component; and
a second cover connected to the second thermal management component, wherein in the first direction, the first cover is disposed opposite to the second cover, the first thermal management component is located between the first cover and the second cover, and the second layer of battery cells is located between the second cover and the first thermal management component.

9. The battery according to claim 3, wherein the first layer of battery cells comprises a plurality of first battery modules spaced apart in a second direction, and the second direction is perpendicular to the first direction; and
the thermal management assembly further comprises:
a third thermal management component, disposed on the first thermal management component and located between two adjacent first battery modules.

10. The battery according to claim 2, wherein the first layer of battery cells comprises a plurality of first battery modules spaced apart in a second direction, and the second direction is perpendicular to the first direction; and
the thermal management assembly further comprises:
a first thermal management component, wherein in the first direction, the first thermal management component is located between the first layer of battery cells and the second layer of battery cells; and
a third thermal management component, disposed on the first thermal management component and located between two adjacent first battery modules.

11. The battery according to claim 9 or 10, wherein the first thermally conductive adhesive comprises a first portion and a fifth portion, the first battery module is connected to the first thermal management component by using the first portion, and the first battery module is connected to the third thermal management component by using the fifth portion.

12. The battery according to any one of claims 9 to 11, wherein the first thermal management component and the third thermal management component are integrally molded or welded.

13. The battery according to any one of claims 9 to 12, wherein the second layer of battery cells comprises a plurality of second battery modules spaced apart in the second direction; and
the thermal management assembly further comprises:
a fourth thermal management component, disposed on the first thermal management component and located between two adjacent second battery modules.

14. The battery according to claim 13, wherein the second thermally conductive adhesive comprises a third portion and a sixth portion, the second battery module is connected to the first thermal management component by using the third portion, and the second battery module is connected to the fourth thermal management component by using the sixth portion.

15. The battery according to claim 13 or 14, wherein the first thermal management component and the fourth thermal management component are integrally molded or welded.

16. The battery according to any one of claims 1 to 15, wherein the first layer of battery cells comprises a plurality of first battery cells, and in the first direction, one end that is of the first battery cell and that is away from the second layer of battery cells is provided with a first electrode terminal; and
the second layer of battery cells comprises a plurality of second battery cells, and in the first direction, one end that is of the second battery cell and that is away from the first layer of battery cells is provided with a second electrode terminal.

17. The battery according to any one of claims 1 to 16, wherein the first direction is parallel to a direction of gravity.

18. An electric apparatus, **characterized by** comprising the battery according to any one of claims 1 to 17, wherein the battery is used for supplying power to the electric apparatus.
